# EUROPÄISCHE PATENTSCHRIFT

(11) **EP 2 568 162 B1**
(45) Veröffentlichungstag und Bekanntmachung des Hinweises auf die Patenterteilung: **23.12.2015**
(21) Anmeldenummer: 11007254.3
(22) Anmeldetag: 07.09.2011
(51) Int. Cl.: F03D 1/00, F03D 11/00

(54) **Windenergieanlage mit einer auf einem Turm angeordneten Gondel mit einem Übergang vom Dach der Gondel in den Rotor**
Wind energy facility with a nacelle on a tower comprising a passage-way from the roof of the nacelle in the rotor hub for service personnel
Eolienne avec une nacelle agencée sur une tour comprenant un passage du toit de la nacelle dans le rotor pour le personnel de maintenance

(43) Veröffentlichungstag der Anmeldung: 13.03.2013
(73) Patentinhaber: Nordex Energy GmbH, 22419 Hamburg (DE)
(72) Erfinder: Steitz, Sebastian, 71726 Benningen (DE); Kathöfer, Sebastian, 17168 Groß Wüstenfelde (DE); Hahn, Martin, 18069 Rostock (DE)
(74) Vertreter: Hauck Patentanwaltspartnerschaft mbB

(56) Entgegenhaltungen:
- WO-A2-2010/072190
- WO-A2-2011/012683
- CA-A1- 2 699 288
- CN-A- 101 949 359
- CN-U- 201 771 692
- US-A1- 2011 142 657

## Beschreibung

Die vorliegende Erfindung betrifft eine Windenergieanlage mit einer auf einem Turm angeordneten Gondel und einer drehbar an der Gondel gelagerten Rotornabe, die mehrere Rotorblätter trägt. Insbesondere betrifft die Erfindung den Zugang von der Gondel in die Rotornabe.

Aus US 2011/0182750 A1 ist eine Windenergieanlage mit einem Turm und einer Rotornabe bekannt geworden. Eine auf dem Turm angeordnete Gondel, in der der Triebstrang der Windenergieanlage gelagert ist, besitzt auf ihrer zur Rotornabe weisenden Seite eine Öffnung. Die Rotornabe besitzt auf ihrer zur Gondel weisenden Seite in einem Bereich zwischen zwei Ansätzen für die Rotorblätter ebenfalls eine Öffnung. In der Y-Stellung der Rotorblätter sind die beiden Öffnungen so zueinander ausgerichtet, dass ein Kanal unter einem spitzen Winkel zum Triebstrang durch die beiden Öffnungen geschoben werden kann, um eine Verbindung zwischen der Gondel und dem Inneren der Rotornabe herzustellen.

Aus CN 201771692 U ist eine Windenergieanlage mit einer Gondel und einem Rotor bekannt, wobei ein Verbindungsweg von der Rotornabe zu einer Ausstiegsöffnung in der Gondel durch eine Reling gesäumt ist. Auch die Rotornabe ist mit einer Reling zur Ausstiegsöffnung in der Rotornabe versehen.

Aus WO 2011/012683 A2 ist ein Rotornabengehäuse für eine Windenergieanlage bekannt, bei dem Griffbügel auf dem Weg zu einer Einstiegsöffnung in die Rotornabe vorgesehen sind.

Allgemein ist es bei dem üblichen Aufbau von Windenergieanlagen so, dass die Rotornabe mit der Rotorwelle verbunden ist, die regelmäßig mit einer Arretierscheibe versehen ist und nahe dem rotorseitigen Ende der Gondel gelagert ist. Dadurch wird ein Zugang in die Rotornabe entlang dem Triebstrang erschwert. Für einen sicheren und komfortablen Zugang zur Rotornabe ist es daher erforderlich, seitlich an der Arretierscheibe der Rotorwelle vorbei eine Zugangsmöglichkeit in die Rotornabe zu schaffen oder die Rotorwelle so auszubilden, dass der Zugang zur Rotornabe durch das Innere der Rotorwelle erfolgen kann. Bekannt ist ebenfalls, einen Zugang zur Rotornabe bereitzustellen, der von oben, also über das Dach der Gondel, erfolgt. Nachteilig hierbei ist aber, dass bei rauen klimatischen Bedingungen der Zugang zu der Rotornabe frei und ungeschützt erfolgen muss.

Der Erfindung liegt die Aufgabe zugrunde, für eine Windenergieanlage einen Zugang zur Rotornabe zu schaffen, der mit möglichst einfachen Mitteln komfortabel erfolgen kann.

Erfindungsgemäß wir die Aufgabe durch eine Windenergieanlage mit den Merkmalen aus Anspruch 1 gelöst. Vorteilhafte Ausgestaltungen bilden den Gegenstand der Unteransprüche.

Die erfindungsgemäße Windenergieanlage ist in an sich bekannter Weise mit einer auf einem Turm angeordneten Gondel und einer drehbar an der Gondel gelagerten Rotornabe ausgestattet, die mehrere Rotorblätter trägt. Die Lagerung der Rotornabe in der Gondel erfolgt über die mit der Rotornabe verbundene Rotorwelle. Die Rotornabe ist in ihrem Inneren hohl ausgebildet und besitzt die Anschlüsse für die Verbindung mit den Rotorblättern. Erfindungsgemäß ist eine Rotornabenverkleidung vorgesehen, durch die die Rotorblätter vorstehen. Fachsprachlich wird eine solche Rotornabenverkleidung auch als Spinner bezeichnet. Die Rotornabenverkleidung besitzt erfindungsgemäß in mindestens einem Bereich zwischen zwei benachbarten Rotorblättern eine erste Mannöffnung, über die der Einstieg in die Rotornabenverkleidung möglich ist. Die Gondel ist auf ihrem Dach mit einer zweiten Mannöffnung ausgestattet, so dass in einer vorbestimmten Stellung der Rotornabe ein Einstieg vom Dach der Gondel in die erste Mannöffnung erfolgen kann. Die vorbestimmte Stellung der Rotornabe ist bevorzugt die Y-Stellung der Rotornabe. Die erste Mannöffnung der Rotornabenverkleidung erlaubt einen Überstieg von dem Gondeldach in die Rotornabe, ohne dass zusätzliche Hilfsmittel erforderlich sind. Der Erfindung liegt dabei die Erkenntnis zugrunde, dass, anders als bei einem seitlichen Übergangsbereich, bei einem Übergangsbereich auf dem Dach der Gondel ein sicherer Einstieg in die erste Mannöffnung möglich ist. Ebenso ist es nicht erforderlich, die Gondel breiter als technisch notwendig auszubilden. Hinzu kommt der Vorteil, dass der Übergang in die Rotornabe auch bei bereits bestehenden Windenergieanlagen nachgerüstet werden kann, indem eine entsprechende Rotornabenverkleidung mit einer ersten Mannöffnung vorgesehen und die Verkleidung der Gondel im Dach um die zweite Mannöffnung ergänzt wird.

Die Gondel besitzt auf ihrem Dach eine verkleidete Brücke, die aus der Gondel herausführt und die zweite Mannöffnung in der Gondel mit der ersten Mannöffnung in der Rotornabenverkleidung verbindet. Die verkleidete Brücke bildet auf der Gondel eine Hutze, die eine vorstehende Ausbuchtung auf dem Gondeldach darstellt, wobei eine Hutzenöffnung zum Rotor weist und eine dritte Mannöffnung bildet, die in einer vorbestimmten Stellung der Rotornabe (Y-Stellung) unmittelbar gegenüber der ersten Mannöffnung positioniert ist. Zwar bilden die unmittelbar einander gegenüberliegenden Öffnungen keinen vollständig geschlossenen Übertrittskanal, jedoch kann der Abstand zwischen den beiden Mannöffnungen so gering gehalten werden, dass keine Absturzgefahr für eine Person während des Übertritts besteht und dass die Person ausreichend vor Wetter geschützt ist. Der geringe Abstand von wenigen Zentimetern (2 cm bis 5 cm) kann durch Dichtlippen oder Dichtbürsten abgedichtet werden. Die Nachrüstbarkeit von bereits fertig konstruierten Windenergieanlagen erweist sich als besonders vorteilhaft, wenn Anlagen mit einem ungeschützten Übergangsbereich an Standorten errichtet werden sollen, in denen ein geschützter Übergangsbereich in die Rotornabe erforderlich ist.

In einer besonders bevorzugten Ausgestaltung steht die verkleidete Brücke mindestens teilweise über eine rotorseitige Gondelwand in Richtung der Rotornabe vor. Ein solcher Vorstand der verkleideten Brücke ist möglich, da die Rotornabenverkleidung sowie die Rotorblätter und die Rotornabe selbst bautechnisch bedingt stets einen gewissen Mindestabstand zur rotorseitigen Gondelwand besitzen müssen. Dieser Abstand wird von der verkleideten Brücke überbrückt.

Zweckmäßigerweise ist die dritte Mannöffnung hin zum Rotor geneigt. Dies bedeutet, dass die die dritte Mannöffnung bildende Umwandung der Brücke an ihrem von der Gondel fortweisenden Ende zur Rotornabe hin geneigt ist. Hierdurch wird die dritte Mannöffnung von oben überdacht, so dass trotz des Abstands zwischen erster und dritter Mannöffnung Niederschlag nicht in die verkleidete Brücke und den von ihr gebildeten Übergangsbereich eintreten kann.

In einer bevorzugten Ausgestaltung ist die verkleidete Brücke auf dem Dach der Gondel angeordnet und steht aus diesem vor. Die verkleidete Brücke besitzt Seitenwände, die ungefähr senkrecht auf das Gondeldach treffen.

In einer möglichen Ausgestaltung ist die verkleidete Brücke mit einer Außenwand verkleidet, die an der Gondel und insbesondere an dem Gondeldach befestigt ist. Eine solche separat vorgesehene Wandung für die Brücke erlaubt es, die verkleidete Brücke bei bestehenden Windenergieanlagen nachzurüsten und deren Wand auf dem Gondeldach zu befestigen. Für eine Nachrüstung muss lediglich eine Ausstiegsöffnung in dem Gondeldach vorgesehen werden, auf das die verkleidete Brücke aufgesetzt wird, um einen geschützten Übergangsbereich zu der Mannöffnung in der Rotornabenverkleidung zu bilden.

Alternativ ist es auch möglich, die verkleidete Brücke mit einer Wandung zu versehen, die einstückig mit mindestens einem Bereich der Wandung des Dachs der Gondel ausgebildet ist. Eine einstückig ausgebildete Wandung für die verkleidete Brücke und das Gondeldach besitzt den Vorteil, dass keine Abdichtungsprobleme im Bereich zwischen dem Gondeldach und der verkleideten Brücke auftreten können.

In einer bevorzugten Ausgestaltung weist die Rotornabe eine Einstiegsöffnung auf, die in einem Bereich zwischen zwei Rotorblättern in einer Wandung der Rotornabe angeordnet ist und die einen Zugang aus der Rotornabe zu der ersten Mannöffnung in der Rotornabenverkleidung schafft. Bevorzugt ist die Einstiegsöffnung in der Rotornabe ungefähr mittig zwischen den Blattanschlüssen angeordnet. Die Einstiegsöffnung in die Rotornabe wird durch die Rotornabenverkleidung überdacht.

Zwischen der Einstiegsöffnung in die Rotornabe und der ersten Mannöffnung in der Rotornabenverkleidung befindet sich ein Übergangsbereich, der ebenfalls durch die Rotornabenverkleidung überdacht ist.

In einer bevorzugten Ausgestaltung ist der mit der ersten Mannöffnung versehene Bereich der Rotornabenverkleidung nach außen vorstehend, zwischen den Rotorblättern ausgebildet. Der vorstehende Bereich erstreckt sich dabei aus einem Bereich der Rotomabenspitze zwischen den Rotorblättern hindurch zu der der Gondel zugewandten Seite der Rotornabenverkleidung. Der vorstehende Bereich bildet eine Hutze, die in ihrer Form an die Form der Rotornabenverkleidung angepasst ist.

In einer bevorzugten Ausgestaltung ist die erste Mannöffnung in der Rotornabenverkleidung von der Gondel fortgeneigt. Der Neigungswinkel der ersten Mannöffnung in der Rotornabenverkleidung entspricht dabei komplementär dem Neigungswinkel der dritten Mannöffnung in der verkleideten Brücke.

In einer bevorzugten Ausgestaltung ist die Rotornabenverkleidung in einem geringen Abstand von der Oberfläche der Rotornabe an dieser angeordnet. Trotz des geringen Abstandes schaffen die vorstehenden Bereiche in der Rotornabenverkleidung ausreichend Raum, um zwischen Rotornabenverkleidung und Rotornabe Wartungsarbeiten, beispielsweise an den Rotorblattanschlüssen, ausführen zu können.

In einer bevorzugten Ausgestaltung sind die erste Mannöffnung und/oder zweite und/oder dritte Mannöffnung durch eine Tür verschließbar. Insbesondere bei der ersten Mannöffnung, die bevorzugt von der Gondel fort geneigt ist, ist ein dichtes Verschließen der Mannöffnung durch eine Tür wichtig, um den Eintritt von Niederschlägen in die Rotornabenverkleidung zu verhindern.

Ein bevorzugtes Ausführungsbeispiel wird nachfolgend anhand der Figuren näher erläutert. Es zeigt:
- Fig. 1: eine Windenergieanlage in einer schematischen Ansicht von der Seite,
- Fig. 2: eine Detailansicht der Gondel und der Rotornabenverkleidung in einer Ansicht von der Seite,
- Fig. 3: die Ansicht aus Fig. 2 in einer geschnittenen Darstellung und
- Fig. 4: eine perspektivische Ansicht der verkleideten Brücke zwischen Gondel und Rotornabenverkleidung.

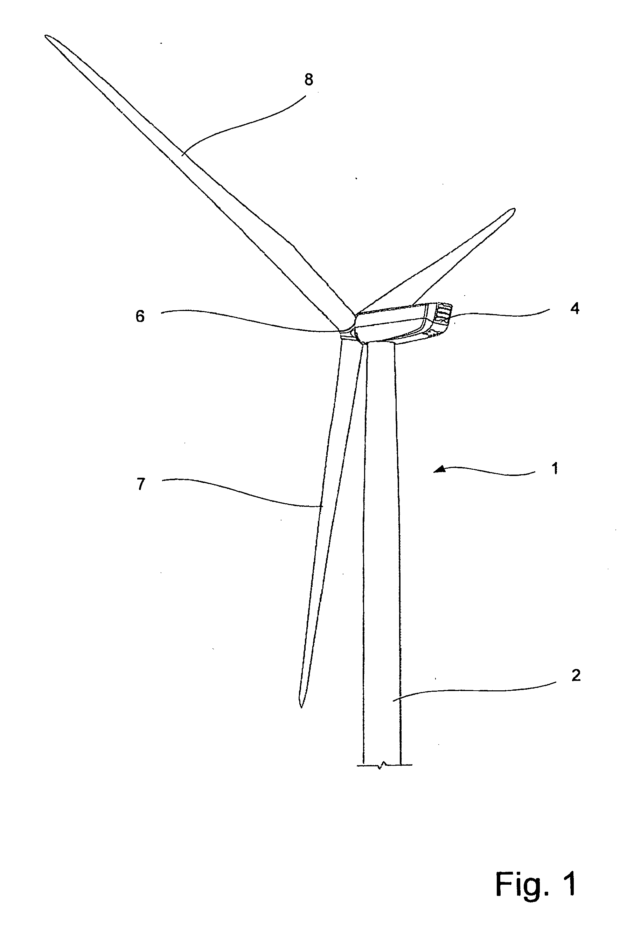

Fig. 1 zeigt in einer schematischen Ansicht eine Windenergieanlage 1, die einen Turm 2 und eine darauf drehbar montierte Gondel 4 besitzt. Die Rotornabe 6 trägt die Rotorblätter 7 und 8, wobei ein drittes Rotorblatt in der Ansicht von der Seite verdeckt ist.

Für Arbeiten in der Rotornabe 6 ist es erforderlich, einen Übergang von der Gondel 4 in die Rotornabe 6 zu schaffen. Die verkleidete Brücke ist in Fig. 1 nicht dargestellt.

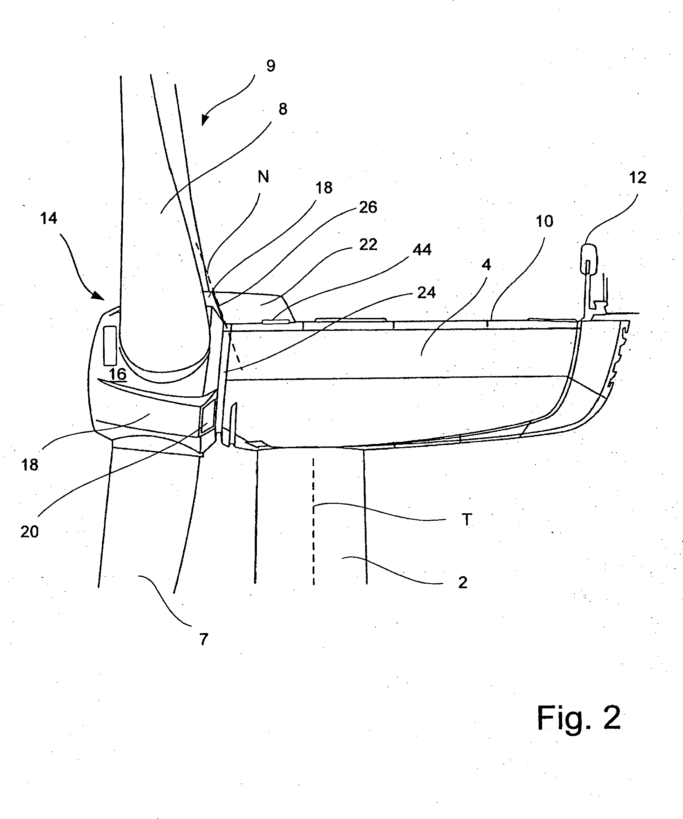

Fig. 2 zeigt in einer Detailansicht den Turm 2 der Windenergieanlage mit der drehbar darauf angeordneten Gondel 4. Die Gondel 4 besitzt an ihrer vom Turm fortweisenden Seite ein Dach 10, das im Wesentlichen flach ausgebildet ist. Auf dem Dach 10 sind beispielsweise Messeinrichtungen und Antennen 12 für die Windenergieanlage vorgesehen.

Der Rotor 14 mit seinen Rotorblättern 7, 8, 9 (wobei Rotorblatt 9 teilweise verdeckt ist) befindet sich in einer Y-Stellung, in der ein Rotorblatt senkrecht nach unten zeigt und zwei Rotorblätter in der 2-Uhr- und der 10-Uhr-Richtung abstehen. Der Rotor 14 besitzt eine Rotornabenverkleidung 16, die bevorzugt aus einem glasfaserverstärktem Kunststoff (GFK) hergestellt ist und die Rotornabe (nicht dargestellt) umschließt. Die Rotornabenverkleidung 16 besitzt drei kreisrunde Öffnungen, durch die die Rotorblätter 7, 8, 9 aus der Rotornabenverkleidung vorstehen und eine weitere Öffnung für die in der Gondel gelagerte Rotorwelle.

Die Rotornabenverkleidung 16 besitzt in dem dargestellten Ausführungsbeispiel hutzenförmig vorstehende Bereiche 18, die in einer geringen Höhe an der von der Gondel 4 fortweisenden Spitze der Rotornabenverkleidung beginnen und mit Richtung auf die Gondel 4 eine zunehmende Höhe besitzen. An dem gondelseitigen Ende des vorstehenden Bereichs 18 ist eine durch eine Tür verschlossene erste Mannöffnung 20 vorgesehen. Die erste Mannöffnung 20 besitzt eine im Wesentlichen rechteckige Form. Der vorstehende Bereich 18 ist jeweils zwischen zwei Rotorblättern vorgesehen. Der zwischen den Rotorblättern 8 und 9 angeordnete vorstehende Bereich 18 ist in Fig. 2 in der Ansicht von der Seite zu erkennen. Deutlich sichtbar in Fig. 2 ist, dass die erste Mannöffnung 20 gegenüber der Turmachse T geneigt ist. Zur Verdeutlichung der Neigung ist eine gedachte Neigungslinie N eingezeichnet, die einer Verlängerung der von der ersten Mannöffnung 20 aufgespannten Ebene entspricht, so dass der Abstand zwischen den Mannöffnungen entlang dem Umfang konstant ist.

In Fig. 2 ist ebenfalls die verkleidete Brücke 22 zu erkennen. Die verkleidete Brücke 22 befindet sich mittig auf dem Dach 10 der Gondel an dem rotorseitigen Ende der Gondel und überdeckt die zweite Mannöffnung 44. Deutlich zu erkennen in Fig. 2 ist, dass die verkleidete Brücke 22 über einen Spalt 24 zwischen Gondel 4 und Rotornabenverkleidung 16 übersteht. Die verkleidete Brücke 22 besitzt eine dritte Mannöffnung 26, die in einer Y-Stellung der Rotorblätter unmittelbar gegenüber der ersten Mannöffnung 20 positioniert ist. Wie in Fig. 2 zu erkennen, ist das rotorseitige Ende der verkleideten Brücke 22 mit der dritten Mannöffnung 26 ebenfalls geneigt, wobei die Neigung der Neigung N der ersten Mannöffnung entspricht.

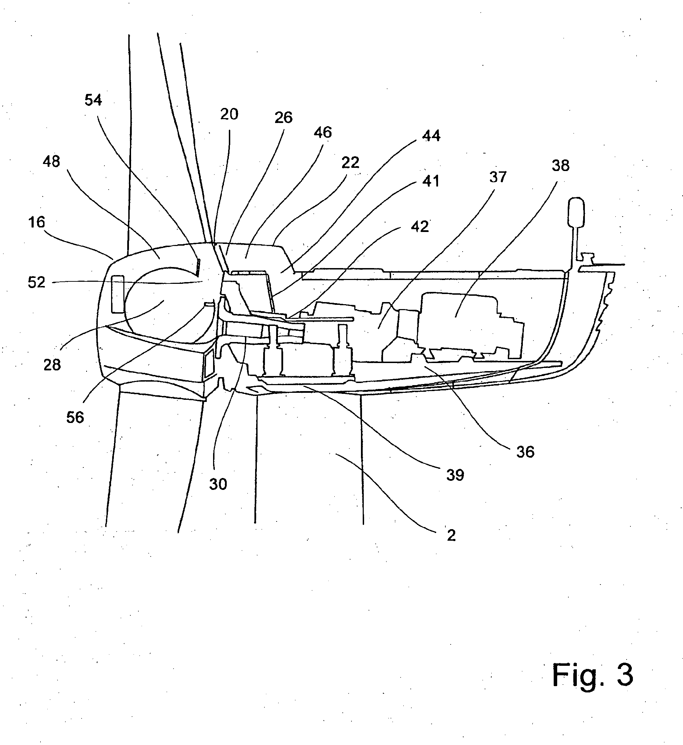

Fig. 3 zeigt schematisch eine geschnittene Ansicht der Gondel und der Rotornabenverkleidung aus Fig. 2. In der schematischen Ansicht ist die Rotornabe 28 zu erkennen. Die Rotornabe 28 ist ein hohl ausgebildeter Körper, an dem die Befestigungsmittel (nicht dargestellt) für die Rotorblätter vorgesehen sind. Ferner können in der Rotornabe noch Komponenten und Antriebe für eine Blattwinkelverstellung vorgesehen sein. Die Rotornabe 28 ist mit der Rotorwelle 30 verbunden Die durch ein Lager (nicht dargestellt) abgestützte Rotorwelle 30 ist mit einem Getriebe 37 verbunden. An die Ausgangswelle des Getriebes 37 ist ein Generator 38 angeschlossen. Das Getriebe 37 und der Generator 38 stützen sich auf einem Maschinenträger 36 ab, der über eine Azimutverstellung 39 drehbar auf dem Turm 2 angeordnet ist. Ein Zugang zu dem Maschinenträger 36 besteht über den Turm durch den Maschinenträger 36 hindurch oder an diesem vorbei.

Oberhalb der Rotorwelle 30 ist eine Standplattform 42 vorgesehen, von der aus über eine Leiter 41 der Ausstieg aus der zweiten Mannöffnung 44 der Gondel möglich ist. Oberhalb der zweiten Mannöffnung 44 befindet sich die verkleidete Brücke 22, über deren Innenraum 46 der Überstieg in die Rotornabenverkleidung 16 möglich ist. Der Innenraum 46 mündet in die dritte Mannöffnung 26, die durch eine Tür verschlossen werden kann. Auch die zweite Mannöffnung 44 in der Gondel kann durch eine separate Tür oder einen Lukendeckel (nicht dargestellt) verschlossen werden. Nach dem Eintritt in die Rotornabenverkleidung durch die erste Mannöffnung 20 gelangt man in einen Zwischenraum 48, der zwischen Rotornabenverkleidung 16 und der Oberfläche der Rotornabe 28 gebildet ist. Von hier aus gelangt man über eine Einstiegsluke 52, die mit einer Tür 54 verschlossen werden kann, auf eine Standplattform 56 im Inneren der Rotornabe 28. Von der Standplattform 56 aus ist ein freier Zugang zu dem Innenraum der Rotornabe 28 möglich. Über den Zwischenraum 48 können Arbeiten auf der Außenseite der Rotornabe 28, geschützt durch die Rotornabenverkleidung, ausgeführt werden.

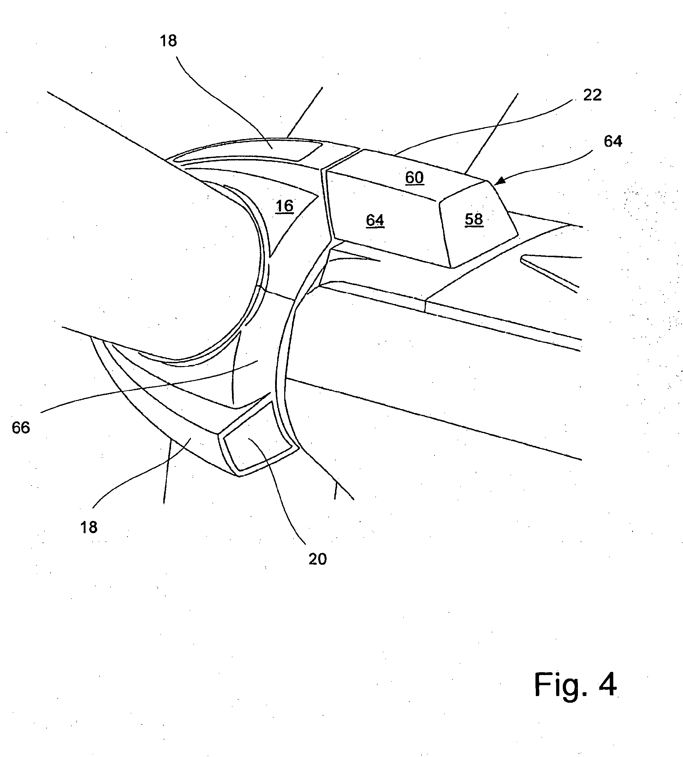

Fig. 4 zeigt in einer perspektivischen Ansicht den näheren geometrischen Aufbau der verkleideten Brücke 22 und des vorstehenden Bereichs 18 in der Rotornabenverkleidung. Die verkleidete Brücke 22 besitzt auf ihrer von dem Rotor abgewandten Seite eine ebene Rückwand 58, die eine leichte Neigung hin zum Rotor besitzt. Seitlich begrenzt wird die verkleidete Brücke durch Seitenwände 62 und 64. Das Dach der verkleideten Brücke 22 wird im Wesentlichen über eine ebene Dachverkleidung 60 gebildet, die eine leichte Neigung zur Rückwand 58 besitzt.

Der nach außen vorstehende Bereich 18 in der Rotornabenverkleidung 16 steht an seinem gondelseitigen Ende am Weitesten aus der Rotornabenverkleidung vor und mündet zur Spitze der Rotornabenverkleidung hin in dieser. An dem dem Betrachter zugewandten, vorstehenden Bereich 18 ist die mit einer Tür verschlossene erste Mannöffnung 20 deutlich zu erkennen. Auch ist in Fig. 4 zu erkennen, dass die Rotornabenverkleidung 16 im Bereich der Rotorblätter, also zwischen zwei benachbarten, nach außen vorstehenden Bereichen 18 gegenüber der Mannöffnung 20 zurücksteht. Der Wandabschnitt 66 der Rotornabenverkleidung 16 erstreckt sich zwischen den vorstehenden Bereichen 18 und bildet den gondelseitigen Abschluss der Rotornabenverkleidung.

## Patentansprüche

1. Windenergieanlage mit einer auf einem Turm angeordneten Gondel (4) und einer drehbar an der Gondel (4) gelagerten Rotornabe (28), die mehrere Rotorblätter (7, 8, 9) trägt, wobei
- eine Rotornabenverkleidung (16) vorgesehen ist, durch die die Rotorblätter (7, 8, 9) vorstehen, wobei die Rotornabenverkleidung (16) in mindestens einem Bereich (18) zwischen zwei benachbarten Rotorblättern (7, 8, 9) eine erste Mannöffnung (20) aufweist,
- die Gondel (4) auf ihrem Dach (10) eine zweite Mannöffnung (44) aufweist, wobei in einer vorbestimmten Stellung der Rotornabe (28) ein Überstieg von der Gondel (4) in die erste Mannöffnung (20) erfolgen kann,
**dadurch gekennzeichnet, dass**
- die Gondel (4) auf ihrem Dach (10) eine verkleidete Brücke (22) besitzt, die aus der Gondel (4) herausführt und die die zweite Mannöffnung (44) in der Gondel (4) mit der ersten Mannöffnung (20) in der Rotornabenverkleidung (16) verbindet, wobei die verkleidete Brücke (22) eine zum Rotor (14) weisende dritte Mannöffnung (26) aufweist.

2. Windenergieanlage nach Anspruch 1, **dadurch gekennzeichnet, dass** die dritte Mannöffnung (26) der verkleideten Brücke (22) in einer vorbestimmten Stellung der Rotornabe (28) unmittelbar gegenüber der ersten Mannöffnung (20) in der Rotornabenverkleidung (16) angeordnet ist.

3. Windenergieanlage nach Anspruch 1 oder 2, **dadurch gekennzeichnet, dass** die verkleidete Brücke (22) mindestens teilweise über eine rotorseitige Gondelwand (24) vorsteht.

4. Windenergieanlage nach einem der Ansprüche 1 bis 3, **dadurch gekennzeichnet, dass** die dritte Mannöffnung (26) hin zu dem Rotor (14) geneigt ist.

5. Windenergieanlage nach einem der Ansprüche 1 bis 4, **dadurch gekennzeichnet, dass** die verkleidete Brücke (22) aus dem Dach (10) der Gondel (4) vorsteht.

6. Windenergieanlage nach einem der Ansprüche 1 bis 5, **dadurch gekennzeichnet, dass** die verkleidete Brücke (22) mit einer Wandung verkleidet ist, die an der Gondel (4) befestigt ist.

7. Windenergieanlage nach einem der Ansprüche 1 bis 6, **dadurch gekennzeichnet, dass** die verkleidete Brücke (22) mit einer Wandung verkleidet ist, die einstückig mit mindestens einem Bereich des Daches (10) der Gondel (4) ausgebildet ist.

8. Windenergieanlage nach einem der Ansprüche 1 bis 7, **dadurch gekennzeichnet, dass** die Rotornabe (28) eine Einstiegsöffnung (52) aufweist, die in einem Bereich (48) zwischen zwei Rotorblättern (7, 8, 9) in einer Wandung der Rotornabe (28) angeordnet ist und einen Zugang aus der Rotornabe (28) zu der ersten Mannöffnung (20) schafft.

9. Windenergieanlage nach einem der Ansprüche 1 bis 8, **dadurch gekennzeichnet, dass** der mit der ersten Mannöffnung (20) versehene Bereich der Rotornabenverkleidung (16) nach außen vorstehend zwischen den Rotorblättern (7, 8, 9) ausgebildet ist.

10. Windenergieanlage nach einem der vorhergehenden Ansprüche, **dadurch gekennzeichnet, dass** die erste Mannöffnung (20) in der Rotornabenverkleidung (16) von der Gondel (4) fort (N) geneigt ist.

11. Windenergieanlage nach einem der Ansprüche 1 bis 10, **dadurch gekennzeichnet, dass** die Rotornabenverkleidung (16) in einem Abstand von der Oberfläche der Rotornabe (28) an dieser angeordnet ist.

12. Windenergieanlage nach einem der vorhergehenden Ansprüche, **dadurch gekennzeichnet, dass** eine oder mehrere der Mannöffnungen (20, 44, 26) durch eine Tür verschließbar sind.

## Claims

1. A wind turbine with a nacelle (4) on a tower and a rotor hub (28) rotatably mounted on the nacelle (4), said rotor hub comprising a plurality of rotor blades (7, 8, 9), wherein
- a rotor hub cover (16) is provided, the rotor blades (7, 8, 9) protruding through said rotor hub cover (16), wherein the rotor hub cover (16) has a first man hole (20) in at least one region (18) between two adjacent rotor blades (7, 8, 9),
- the nacelle (4) has a second man hole (44) on its roof (10), wherein in a predetermined position of the rotor hub (28) it is possible to climb over from the nacelle (4) into the first man hole (20),
**characterized in that**
- the nacelle (4) has on its roof (10) a covered bridge (22) which leads out of the nacelle (4) and which connects the second man hole (44) in the nacelle (4) with the first man hole (20) in the rotor hub cover (16), wherein the covered bridge (22) has a third man hole (26) facing toward the rotor (14).

2. The wind turbine according to claim 1, **characterized in that** the third man hole (26) of the covered bridge (22) in a predetermined position of the rotor hub (28) is arranged directly opposite the first man hole (20) in the rotor hub cover (16).

3. The wind turbine according to claim 1 or 2, **characterized in that** the covered bridge (22) protrudes at least partially over a nacelle wall (24) on the rotor side.

4. The wind turbine according to one of claims 1 to 3, **characterized in that** the third man hole (26) is inclined toward the rotor (14).

5. The wind turbine according to one of claims 1 to 4, **characterized in that** the covered bridge (22) protrudes from the roof (10) of the nacelle (4).

6. The wind turbine according to one of claims 1 to 5, **characterized in that** the covered bridge (22) is covered by a wall which is fastened to the nacelle (4).

7. The wind turbine according to one of claims 1 to 6, **characterized in that** the covered bridge (22) is covered by a wall which is configured integrally with at least one region of the roof (10) of the nacelle (4).

8. The wind turbine according to one of claims 1 to 7, **characterized in that** the rotor hub (28) has an entry opening (52) which is arranged in a region (48) between two rotor blades (7, 8, 9) in a wall of the rotor hub (28) and provides access from the rotor hub (28) to the first man hole (20).

9. The wind turbine according to one of claims 1 to 8, **characterized in that** the region of the rotor hub cover (16) provided with the first man hole (20) is configured to protrude outwardly between the rotor blades (7, 8, 9).

10. The wind turbine according to one of the preceding claims, **characterized in that** the first man hole (20) in the rotor hub cover (16) is inclined away (N) from the nacelle (4).

11. The wind turbine according to one of claims 1 to 10, **characterized in that** the rotor hub cover (16) is arranged on the rotor hub (28), at a distance from the surface of the rotor hub (28).

12. The wind turbine according to one of the preceding claims, **characterized in that** one or more of the man holes (20, 44, 26) are lockable by a door.

## Revendications

1. Éolienne avec une nacelle (4) agencée sur une tour et un moyeu de rotor (28), supporté de manière rotative sur la nacelle (4), portant une pluralité de pales de rotor (7, 8, 9), dans laquelle
- est prévu un revêtement de moyeu de rotor (16) à travers lequel des pales de rotor (7, 8, 9) font saillie, le revêtement de moyeu de rotor (16) présentant dans au moins une zone (18) un premier trou d'homme (20) entre deux pales de rotor (7, 8, 9) voisines,
- la nacelle (4) présente sur son toit (10) un deuxième trou d'homme (44), dans lequel il est possible, dans une position prédéfinie du moyeu de rotor (28), de passer de la nacelle (4) dans le premier trou d'homme (20),
**caractérisée en ce que**
- la nacelle (4) possède sur son toit (10) un pont revêtu (22) qui conduit hors de la nacelle (4) et relie le deuxième trou d'homme (44) de la nacelle (4) avec le premier trou d'homme (20) situé dans le revêtement du moyeu de rotor (16), le pont revêtu (22) présentant un troisième trou d'homme (26) orienté vers le rotor (14).

2. Éolienne selon la revendication 1, **caractérisée en ce que** le troisième trou d'homme (26) du pont revêtu (22) est agencé à une position prédéfinie du moyeu de rotor (28) directement en face du premier trou d'homme (20) dans le revêtement du moyeu de rotor (16).

3. Éolienne selon la revendication 1 ou 2, **caractérisée en ce que** le pont revêtu (22) fait saillie au moins partiellement à travers une paroi de nacelle (24) côté rotor.

4. Éolienne selon l'une quelconque des revendications 1 à 3, **caractérisée en ce que** le troisième trou d'homme (26) est incliné vers le rotor (14).

5. Éolienne selon l'une quelconque des revendications 1 à 4, **caractérisée en ce que** le pont revêtu (22) fait saillie du toit (10) de la nacelle (4).

6. Éolienne selon l'une quelconque des revendications 1 à 5, **caractérisée en ce que** le pont revêtu (22) est paré d'une paroi fixée sur la nacelle (4).

7. Éolienne selon l'une quelconque des revendications 1 à 6, **caractérisée en ce que** le pont revêtu (22) est paré d'une paroi formée en une pièce avec au moins une zone du toit (10) de la nacelle (4).

8. Éolienne selon l'une quelconque des revendications 1 à 7, **caractérisée en ce que** le moyeu de rotor (28) présente un orifice d'accès (52) agencé dans une zone (48) située entre deux pales de rotor (7, 8, 9) dans une paroi du moyeu de rotor (28) et permettant l'accès du moyeu de rotor (28) au premier trou d'homme (20).

9. Éolienne selon l'une quelconque des revendications 1 à 8, **caractérisée en ce que** la zone du revêtement de moyeu de rotor (16) comprenant le premier trou d'homme (20) est formé de manière à faire saillie vers l'extérieur entre les pales de rotor (7, 8, 9).

10. Éolienne selon l'une quelconque des revendications précédentes, **caractérisée en ce que** le premier trou d'homme (20) dans le revêtement de moyeu de rotor (16) est incliné dans le sens (N) s'éloignant de la nacelle (4).

11. Éolienne selon l'une quelconque des revendications 1 à 10, **caractérisée en ce que** le revêtement de moyeu de rotor (16) est agencé à une certaine distance de la surface supérieure du moyeu de rotor (28) sur ce dernier.

12. Éolienne selon l'une quelconque des revendications précédentes, **caractérisée en ce que** un ou plusieurs trous d'homme (20, 44, 26) peuvent être fermés par une porte.
